# EUROPEAN PATENT SPECIFICATION

(11) **EP 2 775 167 B1**
(45) Date of publication and mention of the grant of the patent: **13.07.2016**
(21) Application number: 14158079.5
(22) Date of filing: 06.03.2014
(51) Int. Cl.: F16G 11/06, F16G 11/14

(54) **Clamping device for wire ropes**
Spannvorrichtung für Drahtseile
Dispositif de serrage pour des câbles métalliques

(30) Priority: 07.03.2013 IT MI20130079 U
(43) Date of publication of application: 10.09.2014
(73) Proprietor: Unithermo S.r.l., 20123 Milano (IT)
(72) Inventor: Bruscuglia, Roberto, I - 20020 Lainate (Milan, IT) (IT)
(74) Representative: Lunati & Mazzoni S.r.L.

(56) References cited:
- EP-A1- 0 014 178
- GB-A- 174 760
- GB-A- 187 390
- GB-A- 461 055
- GB-A- 631 864
- GB-A- 2 415 992
- US-A- 3 222 741

## Description

The present invention relates to a clamping device for wire ropes of the type as recited in the preamble of the first claim.

Terminations for safety ropes and the like are known of, composed of a ring or loop portion of rope which a hook, pin or other end of an external component can be inserted in. The terminations thus permit the connection of a user or an object, otherwise difficult to grasp, to said rope.

These are generally made by means of rope grips suitable for joining two portions of rope, folding it back on itself.

Alternatively, terminations for safety ropes and the like are composed of a connector presenting a hole in which to insert the rope and suitable to be plastically deformed so as to clamp the termination to the rope.

The prior art described above has several significant drawbacks.

In fact the first type of termination described does not always have sufficient mechanical resistance and the loop may come undone with serious consequences for the safety of the person or object attached.

Moreover, terminations with rope grips rarely reach the breaking load of the rope except by attaching an unacceptable number thereof, and in addition require frequent re-tightening given that over time the nuts lose their coupling torque.

The problem was accurately described in the book entitled "Wire rope grip terminations: performance tests on wire rope terminations using BS 462 wire rope grips and some comparisons with alternative designs" by C. H. H. Corden, 1996: ISBN 0717611329, witnessing specifically said drawbacks not resolved since 1996.

The second type of termination is not easy to realise on site inasmuch as it requires cumbersome expensive and well-calibrated presses. Moreover this type is not removable and re-utilisable.

In fact, in situations of elevated traction force along the rope, the latter reduces its normal cross-section escaping the rope grips and the like.

Similar devices are disclosed in patent applications GB-A-187390, GB-A-631864, GB-A-461055, GB-A-174760, EP-A-0014178 and GB-A-2415992.

Further drawbacks are, consequently, in the frequent yielding and little reliability of this constraint.

In this situation the technical purpose of the present invention is to develop a clamping device for wire ropes able to substantially overcome the inconveniences mentioned above.

Within the sphere of said technical purpose one important aim of the invention is to provide a clamping device for wire ropes which makes it possible to make a reliable termination. In particular, one aim of the invention is to provide a clamping device for wire ropes suitable to make a termination able to withstand forces of elevated intensity over time and without necessary continual maintenance.

A further aim of the invention is to obtain a re-utilisable termination.

The technical purpose and specified aims are achieved by a clamping device as claimed in the appended Claim 1.

Preferred embodiments are described in the dependent claims.

The characteristics and advantages of the invention are clearly evident from the following detailed description of a preferred embodiment thereof, with reference to the accompanying drawings, in which:
**Fig. 1** shows an axonometric view of a cross-section of a clamping device according to the invention; and
**Fig. 2** shows an axonometric view of a cross-section of a clamping device in use;
**Fig. 3** shows an axonometric view of a clamping device in use; and
**Fig. 4** shows the normal cross-section of the clamping device.

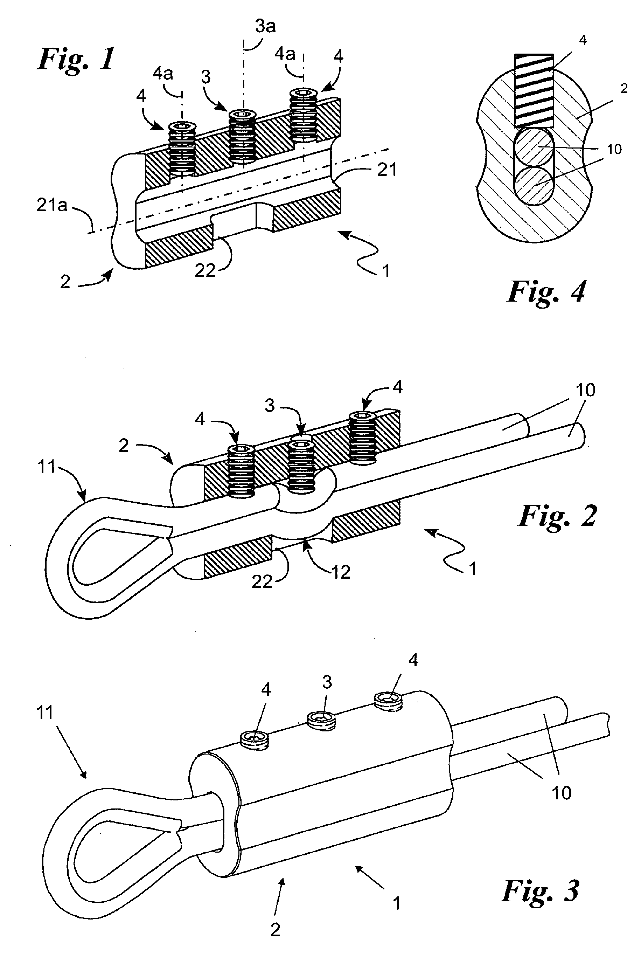

With reference to figure 1, reference numeral **1** globally denotes the clamping device according to the invention.

It is suitable for being coupled to a rope **10** to form a termination **11,** preferably consisting of a loop.

The clamping device comprises a central body **2** including a hole **21,** suitable for housing a rope **10** inside it, and clamping means **3** suitable to constrain the rope 10 to the central body 2.

The central body 2 is made of metal and, appropriately, of aluminium. It also conveniently has an approximately cylindrical sleeve shape.

The hole 21 is preferably a through hole and is suitable to contain the rope **10.**

It defines a main extension axis **21a** and has a cross-section at least equal to double the cross-section of the rope 10 so as to permit the connection of two portions of rope and the formation of the loop **11.** To such purpose the loop 11 preferably has an oval cross-section or the like.

The hole 21 comprises, innovatively, at least one connection seat **22** for the rope 10. The connection seat 22 faces the hole 21 so that the clamping means 3 are able to avail of and clamp a portion of rope 10 in said seat. Substantially, the connection seat is a laterally protruding portion of the hole 21. The seat 22 is for example identifiable in a hole, preferably passing through the side body of the sleeve extending in a perpendicular direction to the extension axis 21 a.

In order to constrain the rope 10 to the central body 2, the clamping device 1 has clamping means 3 suitable to clamp the rope 10 against the seat 22.

The clamping means 3 comprise at least one element suitable to slide so as to protrude towards the inside of said hole 21 in the direction of said seat 22. It is preferably a screw, and preferably only a screw or the like, or another element suitable to slide in relation to the central body 2 along a sliding axis **3a** practically transversal to the hole 21, and in particular to the axis 21 a so as to protrude inwardly to the hole 21 pressing the rope 10 against the seat 22. In detail, the sliding axis 3a is substantially perpendicular to the main extension axis 21 a and, preferably, practically coincides with the axis of the seat 22 and placed on the side opposite the central body 2, in relation to the seat 22.

Preferably, the clamping means 3 and the seat 22 are distant from the ends, calculated along the axis 21 a of the body 2 and, preferably, positioned at the central plane of the central body 2 and perpendicular to the main extension axis 21 a. Alternatively, the seat 22 could also be on one side.

Additionally, the clamping device 1 comprises supplementary clamping means **4** suitable to increment the clamping of the rope 10 to the clamping device 1 defining supplementary clamping points of the rope 10 to the central body 2 and, in particular, to the hole 21.

The supplementary clamping means 4 are suitable to slide in relation to the body 2 along a supplementary sliding axis **4a,** preferably practically parallel to the sliding axis 3a, so as to protrude internally to the hole 21 clamping the rope 10 against the walls of the hole 21. More preferably, the axes 3a and 4a and additionally the axis 21 a are coplanar.

They comprise at least one screw and, preferably, two screws positioned at the two sides and preferably specular, in relation to the clamping means 3 along the axis 21 a.

The coupling operations of a clamping device to a rope 10, described above in a structural sense, are as follows.

Firstly the operator inserts the rope 10 in the hole 21, the turn-up forming the loop 11, and then makes it slide back inside the hole 21.

At this point, the operator acts on the clamping means 3 to constrain the rope 10 to the central body 2 and thus to the clamping device 1.

In detail, by using the threaded coupling between the body 2 and the screw composing the clamping means 3, the operator makes the means 3 slide in relation to the body 2 which consequently begin to protrude from the hole 21 and to press on the rope 10. As a result the rope 10 flexes, preferably elastically, defining at least one bend 12 which the means 3, continuing to advance along the axis 3a, push inside the seat 22, and thus press against said seat 22 blocking the rope 10 to the clamping device 1.

After completing the clamping of the means 3 the operator finishes constraining the rope 10 to the clamping device 1 by means of the supplementary clamping means 4.

In particular, the operator makes the supplementary clamping means 4 slide along the supplementary sliding axis 4a so that they protrude internally to the hole 21 and thus push and clamp the rope 10 against the hole 21.

The invention achieves some important advantages.

One important advantage is the elevated resistance and thus reliability of the connection of the clamping device 1 to the rope 10 and, as a result, the ability of the clamping device 1 to withstand elevated traction forces on the rope 10. Such advantage is achieved thanks to the seat 22 and to the clamping means 3 which, by flexing the rope, create and clamp the bend 12 against the seat 22 thereby preventing the rope 10 from sliding in relation to the body 2.

Moreover, in the case in which the rope 10 is in traction it presses the clamping means 3 in a perpendicular direction to the direction 21a, increasing the strength of the constraint.

As a result the connection formed by the device 1 has a breaking or loosening load which is actually higher than the breaking load of the rope 10.

Another advantage is that the clamping device 1 can be re-utilised.

Variations may be made to the invention without departing from the scope of the inventive concept.

In these cases, or even in the case illustrated in the appended Figures, the clamping device 1 provides for a coupling, for example a ring forming the termination 11, constrained and preferably integral with the central body 2.

All the elements as described and claimed may be replaced with equivalent elements and the details, materials, shapes and dimensions may be any within the scope of the claims.

## Claims

1. System comprising a clamping device (1) and a rope (10),
said clamping device (1) comprising a central body (2) including a through hole (21) said hole defining a main extension axis (21a), housing said rope (10), said central body (2) comprising:
- at least one connection seat (22) for said rope (10) facing said hole (21),
- clamping means (3) suitable to slide along a sliding axis (3a) transversal to said through hole (21) clamping said rope (10) at least partially inside said at least one connection seat (22),
- said through hole (21) has a cross-section at least equal to double the cross-section of the rope (10),
- and in that two portions of said rope (10) are connected to said clamping device (1), are inside said hole (21) and form a loop (11),
- **characterised by** comprising supplementary clamping means (4) suitable to slide in relation to said body (2) clamping said rope (10) against the walls of said hole (21), defining a supplementary sliding axis (4a), substantially parallel to said sliding axis (3a), and positioned at the two sides, in relation to said clamping means (3) along said main extension axis (21a).

2. The system according to the previous claim, in which said clamping means (3) comprise at least one element suitable to slide so as to protrude towards the inside of said hole (21) in the direction of said seat (22).

3. The system as claimed in one or more of the previous claims, in which said hole (21); and in which said sliding axis (3a) is substantially perpendicular to said main extension axis (21a).

4. The system as claimed in one or more of the previous claims, in which said central body (2) is a cylindrical sleeve and said at least one connection seat (22) is a through hole along a wall of said cylindrical sleeve.

5. The system as claimed in one or more of the previous claims, in which said clamping means (3) comprise at least one screw.

6. The system as claimed in one or more of the previous claims , in which said supplementary clamping means (4) comprise at least one screw.

7. The system according to the previous claim, in which said supplementary clamping means (4) comprise at least two screws positioned.

## Patentansprüche

1. System, das eine Spannvorrichtung (1) und ein Seil (10) umfasst, wobei die genannte Spannvorrichtung (1) einen zentralen Körper (2) mit einer Durchgangsöffnung (21) umfasst und die genannte Öffnung, in der das genannte Seil (10) untergebracht ist, eine vorrangige Verlaufsachse (21 a) definiert und der genannte zentrale Körper (2) Folgendes umfasst:
- mindestens einen Befestigungssitz (22) für das genannte Seil (10) vor der genannten Durchgangsöffnung (21);
- Spannelemente (3), die geeignet sind, entlang einer quer zu der genannten Durchgangsöffnung (21) verlaufenden Gleitachse zu gleiten und so das genannte Seil (10) mindestens teilweise im Inneren des genannten Befestigungssitzes (22) einzuspannen,
- wobei die genannte Durchgangsöffnung (21) einen Querschnitt von mindestens dem Doppelten des Querschnitts des Seils (10) aufweist,
- wobei zwei Abschnitte des genannten Seils (10) mit der genannten Spannvorrichtung (1) verbunden sind, sich im Inneren der genannten Durchgangsöffnung (21) befinden und eine Öse (11) bilden,
- **dadurch gekennzeichnet, dass** es zusätzliche Spannelemente (4) umfasst, die geeignet sind, im Verhältnis zu dem genannten Körper (2) zu gleiten und so das genannte Seil (10) gegen die Wände der genannten Durchgangsöffnung (21) zu spannen und damit eine zusätzliche, im Wesentlichen zu der genannten Gleitachse (3a) parallele und auf beiden Seiten im Verhältnis zu den genannten Spannelementen (3) entlang der genannten Hauptverlaufsachse (21 a) verlaufende Gleitachse (4a) zu definieren.

2. Spannvorrichtung (1) nach dem vorangegangenen Anspruch, bei dem die genannten Spannelemente (3) ein Element umfassen, das geeignet ist, so zu gleiten, dass es zur Innenseite der genannten Durchgangsöffnung (21) in Richtung des genannten Sitzes (22) vorsteht.

3. Spannvorrichtung (1) nach einem oder mehreren der vorangegangenen Ansprüche, bei der die genannte Gleitachse (3a) im Wesentlichen senkrecht zu der genannten vorrangigen Verlaufsachse (21 a) verläuft.

4. Spannvorrichtung (1) nach einem oder mehreren der vorangegangenen Ansprüche, bei der es sich bei dem genannten zentrale Körpern (2) um eine zylindrische Buchse handelt und bei der es sich bei dem genannten mindestens einem Befestigungssitz (22) um eine Durchgangsöffnung entlang einer Wand der genannten zylindrischen Buchse handelt.

5. Spannvorrichtung (1) nach einem oder mehreren der vorangegangenen Ansprüche, bei der die genannten Spannelemente (3) mindestens eine Schraube umfassen.

6. Spannvorrichtung (1) nach einem oder mehreren der vorangegangenen Ansprüche 5-6, bei der die genannten Spannelemente (4) mindestens eine Schraube umfassen.

7. Spannvorrichtung (1) nach dem vorangegangenen Anspruch, bei der die genannten Spannelemente (4) zwei Schrauben umfassen.

## Revendications

1. Système comprenant un dispositif de serrage (1) et un câble (10), ledit dispositif de serrage (1) comprenant un corps central (2) comprenant un trou traversant (21), ledit trou définissant un axe de développement prédominant (21 a), logeant ledit câble (10), ledit corps central (2) comprenant :
- au moins un siège d'assujettissement (22) pour ledit câble (10) placé face audit trou traversant (21) ;
- des moyens de serrage (3) aptes à coulisser le long d'un axe de coulissement (3a) transversal audit trou traversant (21) serrant ledit câble (10) au moins partiellement à l'intérieur dudit au moins un siège d'assujettissement (22),
- ledit trou traversant (21) présente une section au moins équivalente au double de la section du câble (10),
- deux parties dudit câble (10) sont connectées audit dispositif de serrage (1), sont à l'intérieur dudit trou (21) et forment une boutonnière (11),
- **caractérisé en ce qu**'il comprend des moyens de serrage supplémentaires (4) aptes à coulisser par rapport audit corps (2) en serrant ledit câble (10) contre les parois dudit trou (21), définissant un axe supplémentaire de coulissement (4a), essentiellement parallèle audit axe de coulissement (3a), et placé des deux côtés, par rapport auxdits moyens de serrage (3) le long dudit axe d'extension principal (21 a).

2. Dispositif de serrage (1) selon la revendication précédente, dans lequel lesdits moyens de serrage (3) comprennent un élément apte à coulisser de sorte à former une protrusion vers l'intérieur dudit trou (21) dans la direction dudit siège (22).

3. Dispositif de serrage (1) selon une ou plusieurs des revendications précédentes, dans lequel ledit axe de coulissement (3a) est essentiellement perpendiculaire audit axe de développement prédominant (21 a).

4. Dispositif de serrage (1) selon une ou plusieurs des revendications précédentes, dans lequel ledit corps central (2) est un manchon cylindrique et ledit au moins un siège d'assujettissement (22) est un trou traversant le long d'une paroi dudit manchon cylindrique.

5. Dispositif de serrage (1) selon une ou plusieurs des revendications précédentes, dans lequel lesdits moyens de serrage (3) comprennent au moins une vis.

6. Dispositif de serrage (1) selon une ou plusieurs des revendications 5-6, dans lequel lesdits moyens supplémentaires de serrage (4) comprennent au moins une vis.

7. Dispositif de serrage (1) selon la revendication précédente, dans lequel lesdits moyens supplémentaires de serrage (4) comprennent deux vis.
